# EUROPÄISCHE PATENTSCHRIFT

(11) **EP 0 644 025 B1**
(45) Veröffentlichungstag und Bekanntmachung des Hinweises auf die Patenterteilung: **03.09.1997**
(21) Anmeldenummer: 94111111.4
(22) Anmeldetag: 16.07.1994
(51) Int. Cl.: B29B 7/76

(54) **Verfahren zum Mischen von Werkstoffkomponenten und Vorrichtung zur Durchführung des Verfahrens**
Method for mixing components and device for executing the method
Procédé pour mélanger des composants et dispositif de mise en oeuvre du procédé

(30) Priorität: 22.09.1993 DE 4332125
(43) Veröffentlichungstag der Anmeldung: 22.03.1995
(73) Patentinhaber: WIWA WILHELM WAGNER GMBH & CO. KG, D-35633 Lahnau (DE)
(72) Erfinder: Leinweber, Günter, D-35633 Lahnau (DE)
(74) Vertreter: Missling, Arne, Dipl.-Ing.

(56) Entgegenhaltungen:
- EP-A- 0 206 073
- EP-A- 0 330 032
- US-A- 3 984 510
- US-A- 4 090 695
- US-A- 4 275 822

## Beschreibung

Die Erfindung betrifft ein Verfahren gemäß dem Oberbegriff des Anspruchs 1 sowie eine Vorrichtung zur Durchführung des Verfahrens.

Ein solches Mischverfahren kommt bei einer Förder- und Dosiereinrichtung zur Anwendung, wie sie aus der DE-Patentanmeldung P 41 34 494.4 bereits bekannt ist. Die Förderung der Werkstoffkomponenten erfolgt dabei diskontinuierlich in Abhängigkeit von der Differenz der Durchfluß-Meßwerte in den Komponentenleitungen, die über pneumatische Meßeinrichtungen ermittelt und verarbeitet werden. Die Zu- und Abschaltung des Durchflusses in den Komponentenleitungen erfolgt über gesteuerte Ventile, so daß die Komponenten portionsweise dem Mischer zugeführt werden. Eine stetige Anpassung der Förderströme in den einzelnen Komponentenleitungen an ein vorgegebenes Mischungsverhältnis ist nicht vorgesehen. Der Nachteil dieses Verfahrens ist zum einen in dem hohen Verschleiß des die Förderleitungen taktweise freigebenden Ventiles zu sehen und auch darin, daß das Mischungsverhältnis nicht immer absolut gleichbleibend ist.

Aus der EP-Patentschrift 0 116 879 B1 ist ein Verfahren einschließlich einer zugehörigen Vorrichtung bekannt, bei dem die Durchfluß-Meßwerte der Förderströme gemessen und als Zählimpulse einer Regeleinrichtung aufgeschaltet und die Fördervolumina der beteiligten Werkstoffkomponenten dabei so bestimmt werden, daß in einem ersten Mischer, dem Mischblock, ein gewünschtes Mischungsverhältnis angenähert wird; die fertige Mischung wird partieweise in einen zweiten Mischer, das Mischrohr, transportiert, aus dem sie dann stetig von einem Verbraucher entnommen werden kann. Es sind demzufolge zur Herstellung einer stetig geförderten Mischung mindestens zwei Mischer erforderlich.

Die US-A-3 984 510 zeigt ein Verfahren zum diskontinuierlichen Mischen von Werkstoffen.

Die Erfindung hat sich deshalb die Aufgabe gestellt, ein Verfahren sowie eine zugehörige Vorrichtung der eingangs näher bezeichneten Art so zu gestalten, daß eine kontinuierliche Mischung der Werkstoffkomponenten in einer einzigen Mischkammer und in einem vorgebbaren Verhältnis zueinander erfolgt, dessen Größe sich in einem Intervall bewegt, das allen Anforderungen gerecht wird.

Erfindungsgemäß wird die Aufgabe zunächst durch ein Verfahren gelöst, bei dem das Fluid das Antriebsorgan einer ersten Dosierpumpe mit einem einstellbaren, vorzugsweise konstanten Strömungsdruck beaufschlagt und der Strömungsdruck des das zweite und jedes weitere Antriebsorgan beaufschlagenden Fluids durch Stellbefehle der Regeleinrichtung jeweils so eingeregelt wird, daß die Durchfluß-Meßwerte der von den Dosierpumpen gerierten Förderströme in einem vorgebbaren, der Regeleinrichtung als Sollwert aufschaltbaren Verhältnis zueinander stehen.

Die Verwendung der Durchfluß-Messung als Meßgröße sichert zunächst, daß das tatsächliche Verhältnis der Werkstoffkomponenten in der fertigen Mischung in engen Grenzen herstellbar ist, weil der Durchfluß die dafür bestimmende physikalische Größe ist. Dabei ist es gleichgültig, ob die zugehörige Meßgröße analog oder digital ausgewiesen wird. Andererseits erfolgt die Regelung aber durch stetige Veränderung des an mindestens einem fluidbetriebenen Antriebsorgan aufschlagenden Strömungsdruckes, so daß auf gesteuerte Absperreinrichtngen für die Werkstoffkomponenten verzichtet werden kann, die bei deren partieweiser Bereitstellung einer hohen Belastung ausgesetzt sind. Für die Regelung des Strömungsdruckes stehen genügend bewährte, handelsübliche und wenig störanfällige Systeme bereit, so daß insgesamt eine relativ bequeme und anwender- und servicefreundliche Einrichtung für ein solches erfindungsgemäßes Verfahren verwendbar ist.

Ein zügiger Verfahrensablauf wird gewährleistet, wenn von einem mit der Regeleinrichtung verbundenen Rechner die Parameter der zur Regelung der während des Mischens variierbaren Strömungsdrücke erforderlichen Stellbefehle errechnet werden. Voraussetzung ist dafür lediglich, daß gegebenenfalls beispielsweise mechanische in elektrische Meßsignale und elektrische in mechanische Stellsignale transformiert werden müssen, was aber keine erheblichen Kosten verursacht und bei modernen Meßwertgebern und Stellmotoren ohnehin selbstverständlich ist. Der Verfahrensablauf ist besonders leicht handhabbar, wenn für die Fluide Druckluft verwendet wird. In diesem Fall ist es auch denkbar, die Regeleinrichtung teilweise mit pneumatischen Bauelementen zu betreiben.

Eine Vorrichtung für das erfindungsgemäße Verfahren besteht zunächst aus mindestens zwei von Antriebsorganen antreibbaren Dosierpumpen, einem vorzugsweise statischen Mischer mit einem Mischkopf, der durch Komponentenleitungen mit der Druckseite der jeweiligen Dosierpumpe hydraulisch verbunden ist, einer Regeleinrichtung und darüber hinaus mit den erforderlichen Armaturen, Meß- und Stelleinrichtungen. In großem Umfang kann dabei auf bewährte handelsübliche Einrichtungen zurückgegriffen werden.

In vorteilhafter Weise können als Antriebsorgane für die Dosierpumpen Kolbenmotoren, beispielsweise mittels Druckluft betriebene Kolbenmotoren, verwendet werden und die Dosierpumpen als Kolbenpumpen ausgebildet sein.

An den Antriebsorganen ist zweckmäßig jeweils ein Druckregler für den das jeweilige Antriebsorgan beaufschlagenden Strömungsdruck des verwendeten Fluids vorgesehen, der mit einer Sollwert-Einstellvorrichtung für den Strömungsdruck dieses Fluids versehen sein kann.

Die Steuerung des Verfahrens gestaltet sich besonders einfach, wenn die Sollwert-Einstellvorrichtung eines ersten Antriebsorgans manuell und/oder von der Regeleinrichtung aus auf einen störgrößenunabhängigen, insbesondere von einem Durchfluß-Meßwert für den Förderstrom der zugehörigen Werkstoffkomponente unabhängigen, festen Sollwert einstellbar ist und wenn dabei an der Sollwert-Einstellvorrichtung eines zweiten und weiterer Antriebsorgane jeweils ein Stellmotor vorgesehen ist, der an die Regeleinrichtung so angeschlossen ist, daß der Sollwert des Strömungsdruckes in Abhängigkeit von dem in der zugehörigen Komponentenleitung festgestellten Durchfluß-Meßwert der jeweiligen Werkstoffkomponente selbsttätig einstellbar ist.

Die Druckregler bilden mit der jeweiligen Sollwert-Einstellvorrichtung und gegebenenfalls einem Stellmotor eine bauliche Einheit, die ohne Schwierigkeiten in die Strömung des betreffenden Fluids einschaltbar ist; sie wird in einfacher Weise beispielsweise unmittelbar an das zugehörige Antriebsorgan angeflanscht.

Die (zentrale) Regeleinrichtung einer solchen Vorrichtung ist Zweckmäßig mit einem Regler für das Verhältnis der Förderströme in den einzelnen Komponentenleitungen zueinander versehen, wobei es praktisch ist, wenn an der Regeleinrichtung eine Sollwert-Stellvorrichtung vorgesehen ist, mit der das Verhältnis der Förderströme vorgebbar ist, so daß eine Programmierung der Vorrichtung keine umständlichen Erörterungen und Manipulationen erfordert.

Ganz unabhängig von der Art der Antriebsorgane ist eine bevorzugte Ausführung der erfindungsgemäßen Vorrichtung dadurch gekennzeichnet, daß ein durch das Antriebsorgan während des Betriebs der Dosierpumpe bewegtes Maschinenteil dieses Antriebsorgans oder der zugehörigen Dosierpumpe zusammen mit einem durch die Bewegung des Maschinenteiles erregbaren Sensor einen Meßwertgeber für den Durchfluß-Meßwert des zugehörigen Förderstromes in der Komponentenleitung bildet, in einfacher Weise vor allem, wenn das bewegte Maschinenteil während des Betriebs zugänglich ist. So kann die Messung bei rotatorischen Ausführungen beispielsweise stroboskopisch oder durch elektrische oder elektromagnetische Zähleinrichtungen erfolgen. Vorteilhaft ist es auch, einen Sensor für einen Magnetgeber zu verwenden, der z.B. am Kolben des Kolbenmotors angeordnet ist.

Bei der Verwendung von Kolbenmotoren ist es ohne weiteres möglich, daß die Dosierpumpe mittels mehrerer Distanzbolzen an dem Kolbenmotor so angeflanscht ist, daß als bewegtes Maschinenteil ein axiales Verbindungsgestänge zwischen den Kolben des Kolbenmotors und der Dosierpumpe zugänglich ist, das mit einem an ihm ortsfesten Geber ausgerüstet werden kann, der in dem an dem Kolbenmotor und/oder der Dosierpumpe ortsfesten Sensor Meßsignale auslöst. Auch kann der Geber an einer der Dosierpumpe abgewandten Seite des Kolbens des Kolbenmotors angebrachten Kolbenstange befestigt sein. Es ist sehr günstig, wenn dabei als Sensor ein inkremental arbeitender Längenmeßstab verwendet wird. Derartige aus einem Geber und einem Sensor bestehende Meßwertgeber sind in vielen Abmessungen und mit einstellbaren Meßlängen handelsüblich.

Um eine Rückförderung einer Werkstoffkomponente mit Sicherheit auszuschließen, ist es am einfachsten, wenn innerhalb jeder Dosierpumpe ein Rückschlagventil für den von ihr angetriebenen Förderstrom angeordnet ist; vorteilhaft ist auch ein Rückschlagventil am Ende der Komponentenleitung, da hierdurch der Bereich, in dem eine Aushärtung der gemischten Komponenten eintreten kann, verkleinert wird.

Es ist möglich, die Produktivität der Regeleinrichtung erheblich anzuheben, wenn diese mit einem Rechner gekoppelt wird, der mindestens zur Berechnung des Sollwertes für den Strömungsdruck des Fluides an dem zweiten und jedem weiteren Antriebsorgan aus den Durchfluß-Meßwerten der Förderströme geeignet ist.

Der Sicherheit der Vorrichtung dient es, wenn sie von der Regeleinrichtung selbsttätig abschaltbar ist, wenn ein vorgegebenes Intervall für das Mischungsverhältnis der Werkstoffkomponenten über- oder unterschritten ist, wie es beispielsweise vorkommt, wenn eine Leckage auftritt. Dabei wird eine unnötige Unterbrechung des Verfahrens vermieden, wenn in der Regeleinrichtung eine Schaltung vorgesehen ist, mit deren Hilfe eine Abschaltung, obwohl ein vorgegebenes Intervall für das Mischungsverhältnis der Werkstoffkomponentem über- oder unterschritten ist, zumindest zeitweise dann unterbleibt, wenn sich das Verfahren in der Anlauf-Phase befindet und dabei ein Wechsel mindestens einer Werkstoffkomponente erfolgt ist oder der Sollwert für den stationären Strömungsdruck desjenigen Fluids neu eingestellt worden ist, mit dem das erste Antriebsorgan beaufschlagbar ist.

Insgesamt ist es durch die Erfindung möglich geworden, einen kontinuierlichen Mischprozeß zu erzeugen, bei dem Störgrößen beständig ausgeglichen werden, so daß die von dem Verbraucher an dem Mischer entnommene Mischung nicht nur weitgehend homogen gemischt, sondern auch in einem konstanten Verhältnis der Anteile der Werkstoffkomponenten geliefert wird. Dabei werden gleichzeitig teure Sonderkonstruktionen für die verwendeten Bau- und Funktionselemente vermieden und stattdessen wird auf seit langem handelsübliche Bauteile zurückgegriffen, die sich bewährt haben.

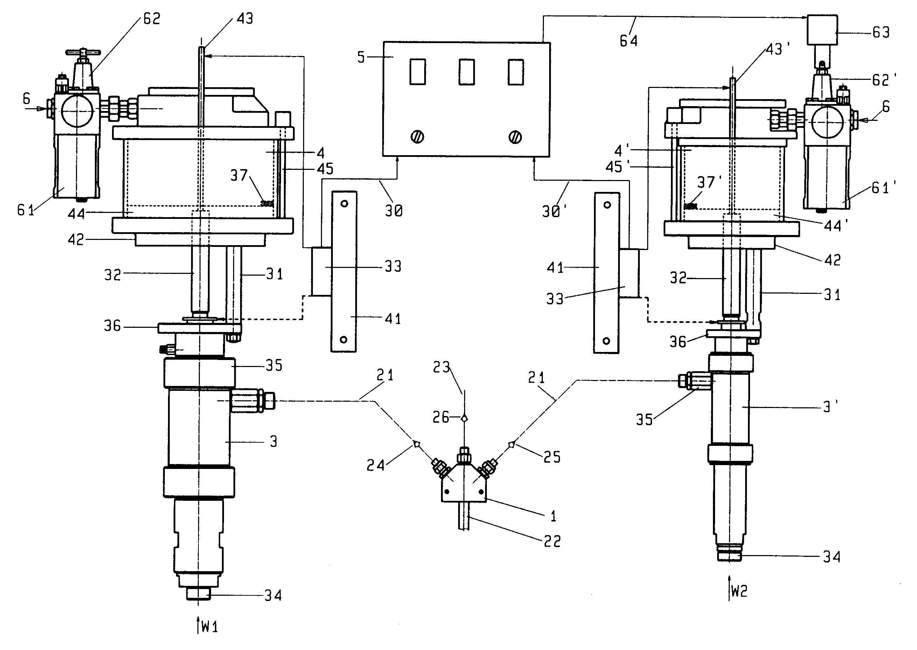

Die Erfindung wird nachstehend an Hand der Zeichnung an einem Ausführungsbeispiel näher erläutert. Die einzige Figur zeigt dabei eine erfindungsgemäße Vorrichtung in teilweise stark schematisierter Darstellung.

Ein zentraler Mischer wird vor allem durch einen Mischkopf 1 charakterisiert, in dem Komponentenleitungen 21 münden. In den Komponentenleitungen 21 werden dem Mischkopf 1 von je einer Dosierpumpe 3,3' die zu vermischenden Werkstoffkomponenten W1,W2, beispielsweise verschiedene Lacke oder ähnliche, zumeist flüssige oder pastose Werkstoffe, zugeführt, während eine Verbraucherleitung 22 die fertige Mischung zu einem in der Zeichnung weggelassenen Verbraucher, beispielsweise einer Farbspritzpistole, transportiert. In jede Komponentenleitung 21 ist an deren Ende je ein Rückschlagventil 24,25 eingeschaltet. Mit 23 ist eine Spülleitung bezeichnet, in die gleichfalls ein Rückschlagventil 26 eingeschaltet ist.

Die - in der Zeichnung zwei - Dosierpumpen 3,3' sind von unterschiedlicher Größe; dies soll darauf hinweisen, daß die Mischung sehr oft aus einer Hauptkomponente und einer oder mehrerer Nebenkomponenten geringeren Anteils an der Mischung besteht.

Beide Dosierpumpen 3,3' sind jeweils mit mehreren Distanzbolzen 31 an einem zugehörigen Kolbenmotor 4,4' angeflanscht in der Weise, daß ein axiales, jeweils einen Kolben einer Dosierpumpe 3,3' mit demjenigen des zugehörigen Kolbens 44,44' des Kolbenmotors 4,4' verbindendes Verbindungsgestänge 32 soweit von außen sichtbar und zugänglich ist, daß ein an dem Verbindungsgestänge 32 befestigter Geber 33 in ganzer Länge des Hubes an einem Sensor 41 vorbeibewegbar ist. Der Sensor 41 ist ortsfest und beispielsweise an dem Kolbenmotor 4,4' befestigt. Mit Hilfe des aus dem Geber 33 und dem Sensor 41 bestehenden Meßwertgebers 33,41 kann demzufolge die Frequenz der Dosierpumpen 3,3' gemessen und in elektrische Meßsignale transformiert als DurchflußMeßwerte 30,30' einer Regeleinrichtung 5 zugeführt werden. Der Geber 33 kann auch an einer Kolbenstange 43,43' befestigt sein, die mit dem Kolben 44,44' verbunden ist. Auch ist es denkbar, einen magnetischen Geber 37,37' zu verwenden, der z.B. am Kolben 44,44' befestigt ist und mit einem außerhalb des Kolbenmotors 4,4' angeordneten Sensor 45,45' zusammenwirkt. Der Geber 33 kann auch innerhalb einer hohlen Kolbenstange angeordnet sein, wobei der Magnetsensor die Kolbenstange umgreift.

In der Zeichnung sind die Dosierpumpen 3,3' mit Eingangsstutzen 34 versehen, die von einem nicht dargestellten Vorratsbehälter aus mit jeweils einer Werkstoffkomponente W1,W2 versorgt werden. Die Komponentenleitungen 21 sind an Ausgangsstutzen 35 angeschlossen. Die Distanzbolzen 31 sind jeweils an einem Flansch 42 der Kolbenmotoren 4,4' und mit einem Flansch 36 der Dosierpumpen 3,3' lösbar verschraubt, so daß die Anordnung dem Hub des Verbindungsgestänges 32 angepaßt werden kann.

Die Kolbenmotoren 4,4' befindet sich ortsfest jeweils ein Druckregler 61,61' mit einem Eingang für ein Fluid 6, mit dem die Kolbenmotoren 4,4' betrieben werden; in der Zeichnung ist die Anordnung so wiedergegeben, wie sie für Druckluft als Fluid 6 charakteristisch ist. Der Sollwert der Druckregler 61,61' ist einstellbar. Der Druckregler 61 ist dabei handbetätigt mittels einer Sollwert-Einstellvorrichtung 62 auf einen zwar veränderbaren, während des Betriebs aber weitgehend konstanten Druck festlegbar, so daß der Förderstrom der Werkstoffkomponente W1 gewissermaßen eine vorgegebene Bezugsgröße für die Regeleinrichtung 5 bildet.

Im Gegensatz dazu wird der Sollwert des Druckreglers 61' von der Regeleinrichtung 5 aus über einen von dieser über eine Steuerleitung 64 mittels eines Stellmotors 63 betätigten Sollwert-Einstellvorrichtung 62' vorgegeben. Die Betätigung des Stellmotors 63 erfolgt dabei in Abhängigkeit von dem Verhältnis der mittels der Meßwertgeber 33,41;45,45' ermittelten Durchfluß-Meßwerte für die Werkstoffkomponenten W1,W2 in den Komponentenleitungen 21 nach Vergleich mit einem zugehörigen, an der Regeleinrichtung 5 eingebbaren Sollwert für dieses Verhältnis, das weitgehend von der gewünschten Mischung abhängt. Der Betrieb wird wesentlich erleichtert, wenn die Regeleinrichtung 5 mit einem Rechner verbunden ist, der die notwendigen Rechenoperationen stetig und schnell ausführen kann.

Die Regeleinrichtung 5 regelt dabei den Druck für den Kolbenmotor 4' derart, daß die von der Dosierpumpe 3 und 3' abgegebenen Mengen in einem vorgegebenen Verhalten zueinander stehen. Da die Regelung stetig verläuft, werden keinerlei Schaltventile in den Komponentenleitungen benötigt. Darüber hinaus werden die Komponenten auch stetig dem Mischer zugeführt, so daß eine homogene Mischung erhalten wird.

## Patentansprüche

1. Verfahren zum kontinuierlichen Mischen von Werkstoffkomponenten insbesondere für eine Farbspritzeinrichtung mittels mindestens zwei je eine Werkstoffkomponente fördernder Dosierpumpen, die jeweils von einem Antriebsorgan betätigbar sind, das seine Antriebsenergie aus einem Fluid bezieht, mit dem das Antriebsorgan beaufschlagbar ist, und die die Werkstoffkomponenten in einen vorzugsweise statischen Mischer fördern, von dem die fertige Mischung einem Verbraucher, beispielsweise einer Farbspritzpistole, kontinuierlich zugeführt werden kann, wobei in jede Komponentenleitung bzw. Dosierpumpe ein Rückschlagventil so eingeschaltet ist, daß keine Rückförderung der Komponenten erfolgen kann, und wobei weiterhin die Förderströme jeder Werkstoffkomponente gemessen und die zugehörigen Durchfluß-Meßwerte in eine Regeleinrichtung eingegeben werden,
dadurch gekennzeichnet, daß
a) das Fluid (6) das Antriebsorgan einer ersten Dosierpumpe (3) mit einem einstellbaren, vorzugsweise konstanten Strömungsdruck stetig beaufschlagt und
b) der Strömungsdruck des das zweite und jedes weitere Antriebsorgan stetig beaufschlagenden Fluids (6) durch Stellbefehle der Regeleinrichtung (5) jeweils so eingeregelt wird, daß die Durchfluß-Meßwerte (30,30') der von den Dosierpumpen (3,3') kontinuierlich gerierten Förderströme in einem vorgebbaren, der Regeleinrichtung (5) als Sollwert aufschaltbaren Verhältnis zueinander stehen.

2. Verfahren nach Anspruch 1, dadurch gekennzeichnet, daß von einem mit der Regeleinrichtung (5) verbundenen Rechner die Parameter der zur Regelung der während des Mischens variierbaren Strömungsdrücke erforderlichen Stellbefehle errechnet werden.

3. Verfahren nach Anspruch 1 oder 2, dadurch gekennzeichnet, daß für die Fluide (6) Druckluft verwendet wird.

4. Verfahren nach einem der Ansprüche 1 bis 3, dadurch gekennzeichnet, daß die Förderströme (30,30') der einzelnen Komponenten aus der Hubbewegung der Dosierpumpen ermittelt werden.

5. Verfahren nach Anspruch 4, dadurch gekennzeichnet, daß die Hubbewegungen über Inkrementalgeber (41,33) ermittelt werden.

6. Vorrichtung zur Durchführung des Verfahrens nach einem der Ansprüche 1 bis 5, bestehend aus mindestens zwei von Antriebsorganen kontinuierlich antreibbaren Dosierpumpen (3,3'), einem Mischer mit einem Mischkopf (1), der durch Komponentenleitungen (21) mit der Druckseite der jeweiligen Dosierpumpe (3,3') hydraulisch verbunden ist, einer den Antrieb der Dosierpumpen steuernden Regeleinrichtung (5) und den erforderlichen Armaturen, Meß- und Stelleinrichtungen.

7. Vorrichtung nach Anspruch 6, dadurch gekennzeichnet, daß als Antriebsorgane für die Dosierpumpen (3,3') Kolbenmotoren (4,4') verwendet werden und die Dosierpumpen (3,3') als Kolbenpumpen ausgebildet sind.

8. Vorrichtung nach Anspruch 6, dadurch gekennzeichnet, daß die Kolbenmotoren (4,4') mittels Druckluft oder Hydraulik betrieben werden.

9. Vorrichtung nach einem der Ansprüche 6 bis 8, dadurch gekennzeichnet, daß an den Antriebsorganen jeweils ein Druckregler (61,61') für den das jeweilige Antriebsorgan beaufschlagenden Strömungsdruck des verwendeten Fluids (6) vorgesehen ist.

10. Vorrichtung nach Anspruch 8, dadurch gekennzeichnet, daß der Druckregler (61,61') mit einer Sollwert-Einstellvorrichtung (62,62') für den Strömungsdruck des Fluids (6) versehen ist.

11. Vorrichtung nach Anspruch 10, dadurch gekennzeichnet, daß die Sollwert-Einstellvorrichtung (62) eines ersten Antriebsorgans manuell und/oder von der Regeleinrichtung (5) aus auf einen störgrößenunabhängigen, insbesondere von einem Durchfluß-Meßwert (30) für den Förderstrom der zugehörigen Werkstoffkomponente (W1) unabhängigen, im wesentlichen festen Sollwert einstellbar ist.

12. Vorrichtung nach Anspruch 10, dadurch gekennzeichnet, daß an der Sollwert-Einstellvorrichtung (62') eines zweiten und weiterer Antriebsorganes jeweils ein Stellmotor (63) vorgesehen ist, der an die Regeleinrichtung (5) so angeschlossen ist, daß der Sollwert des Strömungsdruckes in Abhängigkeit von dem in der zugehörigen Komponentenleitung (21) festgestellten Durchfluß-Meßwert (30') der jeweiligen Werkstoffkomponente (W2) selbsttätig einstellbar ist.

13. Vorrichtung nach einem der Ansprüche 6 bis 8, dadurch gekennzeichnet, daß die Regeleinrichtung (5) mit einem Stellglied für die Einstellung des Verhältnisses der Förderströme in den einzelnen Komponentenleitungen (21) zueinander versehen ist.

14. Vorrichtung nach Anspruch 13, dadurch gekennzeichnet, daß an der Regeleinrichtung (5) eine Sollwert-Stellvorrichtung vorgesehen ist, mit der das Verhältnis der Förderströme vorgebbar ist.

15. Vorrichtung nach einem der Ansprüche 6 bis 14, dadurch gekennzeichnet, daß ein durch das Antriebsorgan während des Betriebs der Dosierpumpe (3,3') bewegtes Maschinenteil dieses Antriebsorgans oder der zugehörigen Dosierpumpe (3,3') zusammen mit einem durch die Bewegung des Maschinenteiles erregbaren Sensor (41) einen Meßwertgeber (33,41) für den Durchfluß-Meßwert (30,30') des zugehörigen Förderstromes in der Komponentenleitung (21) bildet.

16. Vorrichtung nach Anspruch 15, dadurch gekennzeichnet, daß das bewegte Maschinenteil während des Betriebs sichtbar ist.

17. Vorrichtung nach einem der Ansprüche 7 bis 11 und Anspruch 15 oder 16, dadurch gekennzeichnet, daß die Dosierpumpe (3,3') mittels mehrerer Distanzbolzen (31) an dem Kolbenmotor (4,4') so angeflanscht ist, daß als bewegtes Maschinenteil ein axiales Verbindungsgestänge (32) zwischen den Kolben des Kolbenmotors (4,4') und der Dosierpumpe (3,3') sichtbar ist.

18. Vorrichtung nach Anspruch 17, dadurch gekennzeichnet, daß das Verbindungsgestänge (32) oder eine der Dosierpumpe (3,3') abgewandte Kolbenstange (43) mit einem an ihm bzw. ihr ortsfesten Geber (33) ausgerüstet ist, der in dem an dem Kolbenmotor (4,4') und/oder der Dosierpumpe (3,3') ortsfesten Sensor (41) Meßsignale auslöst.

19. Vorrichtung nach Anspruch 17, dadurch gekennzeichnet, daß als Sensor (41) ein inkremental arbeitender Längenmeßstab verwendet wird.

20. Vorrichtung nach einem der Ansprüche 7 bis 19, dadurch gekennzeichnet, daß innerhalb jeder Dosierpumpe (3,3') ein Rückschlagventil für den von ihr angetriebenen Förderstrom angeordnet ist.

21. Vorrichtung nach einem der Ansprüche 6 bis 20, dadurch gekennzeichnet, daß die Regeleinrichtung (5) mit einem Rechner gekoppelt ist, der mindestens zur Berechnung des Sollwertes für den Strömungsdruck des Fluides (6) an dem zweiten und jedem weiteren Antriebsorgan aus den Durchfluß-Meßwerten (30,30') der Förderströme geeignet ist.

22. Vorrichtung nach Anspruch 6, dadurch gekennzeichnet, daß sie von der Regeleinrichtung (5) selbsttätig abschaltbar ist, wenn ein vorgegebenes Intervall für das Mischungsverhältnis der Werkstoffkomponenten (W1,W2) über- oder unterschritten ist.

23. Vorrichtung nach Anspruch 22, dadurch gekennzeichnet, daß in der Regeleinrichtung (5) eine Schaltung vorgesehen ist, mit deren Hilfe eine Abschaltung, obwohl ein vorgegebenes Intervall für das Mischungsverhältnis der Werkstoffkomponenten (W1,W2) über- oder unterschritten ist, zumindest zeitweise dann unterbleibt, wenn
a) sich das Verfahren in der Anlauf-Phase befindet und dabei ein Wechsel mindestens einer Werkstoffkomponente (W1,W2) erfolgt ist oder
b) der Sollwert für den stationären Strömungsdruck desjenigen Fluids (6) neu eingestellt worden ist, mit dem das erste Antriebsorgan beaufschlagbar ist.

24. Vorrichtung nach einem der Ansprüche 7 bis 11 bzw. 20 bis 23, dadurch gekennzeichnet, daß am Kolben des Antriebs (4) und/oder der Dosierpumpe (3,3') ein Magnetgeber angeordnet ist, der mit einem die Bewegung des Kolbens erfassenden Magnetsensor zusammenwirkt.

## Claims

1. A method for the continuous mixing of material components, more particularly for a paint spraying device, by means of at least two metering pumps each conveying a material component, which pumps can each be actuated by a drive member drawing its drive energy from a fluid acting upon the drive member and which convey the material components into a preferably static mixer, from which the finished mixture can be continuously supplied to a consumer, for example a paint spray gun, a non-return valve being connected in each component line or metering pump so that there can be no return flow of the components, and furthermore the flows of each material component are measured and the associated flow measurement values are fed into a control device, characterised in that
a) the fluid (6) continuously acts upon the drive member of a first metering pump (3) with an adjustable, preferably constant flow pressure and
b) the flow pressure of the fluid (6) continuously acting upon the second and each further drive member is adjusted by adjustment commands of the control device (5) so that the flow measurement values (30, 30') of the flows continuously controlled by the metering pumps (3, 3') lie in a predeterminable ratio to one another, which ratio can be supplied to the control device (5) as a nominal value.

2. A method according to claim 1, characterised in that the parameters of the adjustment commands required for controlling the flow pressures which may vary during the mixing are calculated by a computer connected to the control device (5).

3. A method according to claim 1 or 2, characterised in that compressed air is used for the fluids (6).

4. A method according to one of claims 1 to 3, characterised in that the flows (30, 30') of the individual components are determined from the reciprocating movement of the metering pumps.

5. A method according to claim 4, characterised in that the reciprocating movements are determined via incremental transmitters (41, 33).

6. A device for carrying out the method according to one of claims 1 to 5, comprises at least two metering pumps (3, 3') continuously drivable by drive members, a mixer with a mixing head (1), which is hydraulically connected by component lines (21) to the delivery side of the respective metering pump (3, 3'), a control device (5) controlling the drive of the metering pumps and the required fixtures, measuring and adjusting devices.

7. A device according to claim 6, characterised in that piston motors (4, 4') are used as drive members for the metering pumps (3, 3') and the metering pumps (3, 3') are constructed as piston pumps.

8. A device according to claim 6, characterised in that the piston motors (4, 4') are operated by means of compressed air or hydraulics.

9. A device according to one of claims 6 to 8, characterised in that a pressure control (61, 61') is provided on each drive member for the flow pressure of the fluid (6) which is used and which acts upon the respective drive member.

10. A device according to claim 8, characterised in that the pressure control (61, 61') is provided with a nominal value adjusting device (62, 62') for the flow pressure of the fluid (6).

11. A device according to claim 10, characterised in that the nominal value adjusting device (62) of a first drive member is adjustable manually and/or by the control device (5) to a disturbance value-independent, substantially fixed nominal value, more particularly a nominal value independent of a flow measurement value (30) for the flow of the associated material component (W1).

12. A device according to claim 10, characterised in that an adjusting motor (63) is provided in each case on the nominal value adjusting device (62') of a second and further drive member, the adjusting motor (63) being connected to the control device (5) in such a manner that the nominal value of the flow pressure can be automatically adjusted as a function of the flow measurement value (30') of the respective material component (W2) determined in the associated component line (21).

13. A device according to one of claims 6 to 8, characterised in that the control device (5) is provided with an adjusting member for adjusting the ratio of the flows in the individual component lines (21) relative to one another.

14. A device according to claim 13, characterised in that a nominal value adjusting device is provided on the control device (5), by means of which nominal value adjusting device the ratio of the flows can be preset.

15. A device according to one of claims 6 to 14, characterised in that a machine part of the drive member or the associated metering pump (3, 3') which is moved by the drive member during the operation of the metering pump (3, 3'), together with a sensor (41) responsive to the movement of the machine part, forms a measurement value transmitter (33, 41) for the flow measurement value (30, 30') of the associated flow in the component line (21).

16. A device according to claim 15, characterised in that the moved machine part is visible during operation.

17. A device according to one of claims 7 to 11 and claim 15 or 16, characterised in that the metering pump (3, 3') is flanged onto the piston motor (4, 4') by means of a plurality of spacing bolts (31) in such a manner that an axial connecting rod system (32) between the pistons of the piston motor (4, 4') and the metering pump (3, 3') is visible as the moved machine part.

18. A device according to claim 17, characterised in that the connecting rod system (32) or a piston rod (43) facing away from the metering pump (3, 3') is provided with a transmitter (33) fixed to said connecting rod system (32) or piston rod (43), which transmitter (33) triggers measurement signals in the sensor (41) fixed to the piston motor (4, 4') and/or metering pump (3, 3').

19. A device according to claim 17, characterised in that an incrementally operating length measuring rod is used as the sensor (41).

20. A device according to one of claims 7 to 19, characterised in that a non-return value is arranged within each metering pump (3, 3') for the flow driven by said pump.

21. A device according to one of claims 6 to 20, characterised in that the control device (5) is coupled to a computer, which is at least suitable for calculating the nominal value for the flow pressure of the fluid (6) at the second and each further drive member from the flow measurement values (30. 30') of the flows.

22. A device according to claim 6, characterised in that it can be automatically switched off by the control device (5) if a predetermined interval for the mixing ratio of the material components (W1, W2) is exceeded or not attained.

23. A device according to claim 22, characterised in that a circuit is provided in the control device (5) by means of which a switching off is at least periodically prevented, even though a predetermined interval for the mixing ratio of the material components (W1, W2) is exceeded or not attained, if
a) the process is in the start-up phase and a change of at least one material component (W1, W2) has been changed or
b) the nominal value has been readjusted for the stationary flow pressure of the fluid (6) acting upon the first drive member.

24. A device according to one of claims 7 to 11 or 20 to 23, characterised in that a magnet transmitter cooperating with a magnet sensor detecting the movement of the piston is arranged on the piston of the drive (4) and/or of the metering pump (3, 3').

## Revendications

1. Procédé de mélange en continu des composants d'une composition, en particulier pour une installation de pulvérisation de peinture, au moyen d'au moins deux pompes de dosage refoulant respectivement chacune un composant de la composition, qui peuvent être actionnées respectivement par un organe d'entraînement recevant son énergie motrice d'un fluide avec lequel l'organe d'entraînement peut être alimenté et qui refoulent les composants dans un mélangeur, de préférence statique, par lequel le mélange fini peut être amené de manière continue à un utilisateur, par exemple un pistolet pulvérisateur de peinture, un clapet antiretour étant installé dans chaque conduite de composant ou dans chaque pompe de dosage de telle manière qu'il ne puisse se produire aucun transport en retour des composants, et en outre les courants de transport de chaque composant étant mesurés et les valeurs de mesure des débits associées étant introduites dans un système régulateur, caractérisé en ce que
a) le fluide (6) alimente en permanence l'organe d'entraînement d'une première pompe de dosage (3) avec une pression d'écoulement réglable, de préférence constante, et
(b) la pression d'écoulement du fluide (6) alimentant en permanence le deuxième et chaque autre organe d'entraînement est réglée respectivement par les ordres de réglage du système régulateur (5) de telle manière que les valeurs de mesure des débits (30, 30') des courants de transport gérés de manière continue par les pompes de dosage (3, 3') sont l'une par rapport à l'autre dans un rapport donné, qui peut être fixé comme valeur de consigne pour le système régulateur (5).

2. Procédé selon la revendication 1, caractérisé en ce que les paramètres des ordres de réglage nécessaires pour la régulation des pressions d'écoulement variables pendant le mélange sont calculés par un calculateur connecté au système régulateur (5).

3. Procédé selon l'une des revendications 1 ou 2, caractérisé en ce que, pour les fluides (6), on utilise de l'air comprimé.

4. Procédé selon l'une des revendications 1 à 3, caractérisé en ce que les courants de transport (30, 30') des différents composants sont assurés par le mouvement alternatif des pompes de dosage.

5. Procédé selon la revendication 4, caractérisé déterminés en ce que les mouvements alternatifs sont assurés par l'intermédiaire de capteurs incrémentaux (41, 33).

6. Dispositif pour la réalisation du procédé selon l'une des revendications 1 à 5, comportant au moins deux pompes de dosage (3, 3') qui peuvent être entraînées de manière continue par des organes d'entraînement, un mélangeur pourvu d'une tête de mélange (1) reliée hydrauliquement par des conduites de composants (21) au côté pression de la pompe de dosage respective (3, 3'), un système régulateur (5) commandant l'entraînement des pompes de dosage et les accessoires, et dispositifs de mesure et de réglage nécessaires.

7. Dispositif selon la revendication 6, caractérisé en ce que, comme organes d'entraînement pour les pompes de dosage (3, 3'), on utilise des moteurs à piston (4, 4') et que les pompes de dosage (3, 3') sont constituées par des pompes à piston.

8. Dispositif selon la revendication 6, caractérisé en ce que les moteurs à piston (4, 4') sont actionnés par de l'air comprimé ou un fluide hydraulique.

9. Dispositif selon l'une des revendications 6 à 8, caractérisé en ce que, sur les organes d'entraînement, est prévu respectivement un régulateur de pression (61, 61') pour la pression d'écoulement du fluide utilisé (6) alimentant l'organe d'entraînement respectif.

10. Dispositif selon la revendication 8, caractérisé en ce que le régulateur de pression (61, 61') est pourvu d'un dispositif de réglage de valeur de consigne (62, 62') pour la pression d'écoulement du fluide (6).

11. Dispositif selon la revendication 10, caractérisé en ce que le dispositif de réglage de valeur de consigne (62) d'un premier organe d'entraînement peut être réglé manuellement et/ou par le système régulateur (5) à une valeur de consigne sensiblement fixe indépendante des grandeurs pertubatrices, indépendante en particulier d'une valeur de mesure de débit (30) pour le courant de transport du composant (W1) associé.

12. Dispositif selon la revendication 10, caractérisé en ce que, sur le dispositif de réglage de valeur de consigne (62') d'un deuxième et d'autres organes d'entraînement, il est prévu respectivement un servomoteur (63), qui est relié au système régulateur (5) de telle manière que la valeur de consigne de la pression d'écoulement soit réglable automatiquement en fonction de la valeur de la mesure de débit (30') constatée dans la conduite de composant associée (21) du composant (W2) respectif.

13. Dispositif selon l'une des revendications 6 à 8, caractérisé en ce que le système régulateur (5) est pourvu d'un élément de réglage pour le réglage du rapport entre les courants de transport dans les différentes conduites de composants (21).

14. Dispositif selon la revendication 13, caractérisé en ce qu'il est prévu sur le système régulateur (5) un dispositif de réglage de valeur de consigne avec lequel le rapport des courants de transport peut être prédéterminé.

15. Dispositif selon l'une des revendications 6 à 14, caractérisé en ce qu'une pièce de machine d'un organe d'entraînement ou de la pompe de dosage associée (3, 3') entraînée par cet organe d'entraînement pendant le fonctionnement de la pompe de dosage (3, 3') forme, avec un détecteur (41) sensible au mouvement de la pièce de machine, un capteur de mesure (33, 41) pour la valeur de mesure du débit (30, 30') du courant de transport associé dans la conduite de composant (21).

16. Dispositif selon la revendication 15, caractérisé en ce que la pièce de machine entraînée pendant le fonctionnement est visible.

17. Dispositif selon l'une des revendications 7 à 11 et la revendication 15 ou 16, caractérisé en ce que la pompe de dosage (3, 3') est bridée au moyen de plusieurs boulons d'entretoisement (31) au moteur à piston (4, 4') de telle manière que, comme pièce de machine entraînée, une tringlerie de liaison axiale (32) soit visible entre le piston du moteur à piston (4, 4') et la pompe de dosage (3, 3').

18. Dispositif selon la revendications 17, caractérisé en ce que la tringlerie de liaison (32) ou une tige de piston (43) opposée à la pompe de dosage (3, 3') est équipée d'un capteur fixe (33) par rapport à celle-ci ou celle-là, qui déclenche des signaux de mesure dans le détecteur (41) fixe par rapport au moteur à piston (4, 4') et/ou à la pompe de dosage (3, 3').

19. Dispositif selon la revendication 17, caractérisé en ce que, comme détecteur (41), on utilise une règle graduée travaillant de manière incrémentale.

20. Dispositif selon l'une des revendications 7 à 19, caractérisé en ce que, à l'intérieur de chaque pompe de dosage (3, 3'), est placé un clapet antiretour pour le courant de transport entraîné par celle-ci.

21. Dispositif selon l'une des revendications 6 à 20, caractérisé en ce que le système régulateur (5) est connecté à un calculateur capable au moins de calculer la valeur de consigne pour la pression d'écoulement du fluide (6) sur le deuxième et chaque autre organe d'entraînement à partir des valeurs de mesure de débit (30, 30') des courants de transport.

22. Dispositif selon la revendication 6, caractérisé en ce qu'il peut être débranché automatiquement du système régulateur (5), si le rapport de mélange des composants (W1, W2) se trouve en dessous ou au-dessus d'une fourchette donnée.

23. Dispositif selon la revendication 22, caractérisé en ce que, dans le système régulateur (5), il est prévu un montage à l'aide duquel une mise hors circuit n'a pas lieu, du moins pendant un certain temps, bien que le rapport de mélange des matériaux composants (W1, W2) se trouve en dessous ou au-dessus d'une fourchette donnée, si
a) le procédé se trouve dans une phase de démarrage pendant lequel un changement d'au moins un des composants (W1, W2) a eu lieu ou
b) la valeur de consigne pour la pression d'écoulement stationnaire de ce fluide (6) a été réglée à nouveau, avec laquelle le premier organe d'entraînement peut être alimenté.

24. Dispositif selon l'une des revendications 7 à 11 et 20 à 23, caractérisé en ce que, sur le piston de l'entraînement (4) et/ou de la pompe de dosage (3, 3'), est placé un capteur magnétique qui coopère avec un détecteur magnétique détectant le mouvement du piston.
